# EUROPÄISCHE PATENTSCHRIFT

(11) **EP 4 093 241 B1**
(45) Veröffentlichungstag und Bekanntmachung des Hinweises auf die Patenterteilung: **31.12.2025**
(21) Anmeldenummer: 21701976.9
(22) Anmeldetag: 25.01.2021
(51) Int. Cl.: A47B 57/20, A47B 57/40, A47B 57/54, A47F 11/10

(54) **VERBINDUNGSEINRICHTUNG, STRUKTURSYSTEM UND REGAL**
CONNECTION DEVICE, STRUCTURAL SYSTEM, AND SHELF
DISPOSITIF DE LIAISON, SYSTÈME STRUCTURAL ET ÉTAGÈRE

(30) Priorität: 23.01.2020 CH 752020
(43) Veröffentlichungstag der Anmeldung: 30.11.2022
(73) Patentinhaber: Visplay GmbH, 79576 Weil am Rhein (DE)
(72) Erfinder: JERABEK, Harald, 79395 Neuenburg (DE); SANDER, Marco, 76576 Weil am Rhein (DE)
(74) Vertreter: Latscha Schöllhorn Partner AG
(86) Internationale Anmeldenummer: PCT/EP2021/051587
(87) Internationale Veröffentlichungsnummer: WO 2021/148671

(56) Entgegenhaltungen:
- CH-A- 523 039
- US-A1- 2006 209 537

## Beschreibung

### Technisches Gebiet

Die Erfindung betrifft eine Verbindungseinrichtung und ein Struktursystem zum modularen Aufbau von Regalen sowie ein aus einem solchen Struktursystem aufgebautes Regal.

### Stand der Technik

Zum flexiblen Zusammenstellen von Möbeln sind Systeme bekannt, bei denen sich aus Grundkomponenten variabel Möbelstrukturen aufbauen lassen. Gerade in Warengeschäften oder in Büros, wo typischerweise die Möblierung beziehungsweise die Anforderungen an die Möblierung von Zeit zu Zeit ändert, sind variable Möbelbausysteme verbreitet.

Oft basieren bekannte variable Möbelbausysteme auf einer dreidimensionalen tragenden Rohrstruktur, die in unterschiedlicher Weise aufgebaut werden kann. Beispielsweise ist in der EP 0 262 090 A1 eine Möbelstruktur beschrieben, die eine Mehrzahl von über Knotenelemente verbindbaren Rohren aufweist. Mittels der Knotenelemente können in diesem System die Rohre in unterschiedlicher Weise zusammengesetzt werden und damit insbesondere Gestelle beziehungsweise Regale in unterschiedlichen Formen erstellt werden. Auch können die verbundenen Rohre mit Sichtblenden und Böden ausgestattet werden, die zwischen den Rohren montiert werden.

Auch sind einfachere Regale bekannt, bei denen seitliche Vertikalstützen über einen oder mehrerer Regalböden verbunden werden. Dabei werden zur Verbindung der Vertikalstützen mit den Regalen typischerweise Einhänger verwendet. Insbesondere werden die Einhänger in Lochungen in den Vertikalstützen auf jeweils einer Höhe eingesetzt und dann werden die Regalböden auf die aus den Lochungen ragenden Einhänger aufgelegt.

Da bei solchen Regalen die Vertikalstützen häufig nur über die aufgelegten Regalböden verbunden sind, sind sie typischerweise vergleichsweise wackelig, und vermögen nur ungenügend Lasten zu tragen. Insbesondere sind deshalb solche Regale für den professionellen Gebrauch in Warengeschäften oder auf Messen meistens ungeeignet beziehungsweise nicht bevorzugt.

Um die Stabilität bei herkömmlichen Regalen zu erhöhen, ist es bekannt, die Vertikalstützen über Querstreben oder diagonal verlaufende Streben zusätzlich miteinander zu verbinden. Solche Streben werden typischerweise mit den Vertikalstützen verschraubt oder in ähnlicher Weise befestigt. Obwohl die Streben zum Erreichen einer verbesserten Stabilität im Regal dienlich sein können, erhöhen sie auch signifikant den Aufwand für den Auf-, Um- und Abbau des Regals. Gerade unter anderem in modernen Verkaufsgeschäften oder auf Messen, wo heutzutage zunehmend ein Bedürfnis besteht, Möblierungen oft und umfassend anzupassen, ist dieser zusätzliche Aufwand nachteilig. Zudem sind die Streben auch aus ästhetischen und Sicherheitsgründen sowie aus praktischen Gründen - wie beispielsweise der Zugänglichkeit der Regalböden von allen Seiten her - häufig unerwünscht. Weiter ist in der CH 523 039 ein zerlegbares Gestell beschrieben, bei dem ein Tablar mittels eines konischen Bolzens an einen Pfosten angedrückt wird.

Weitere Schwierigkeiten bei den erwähnten Regalen bekannter Art bereitet die Zuführung von Strom auf die Tablarböden. Typischerweise wird der Strom an oder in den Vertikalstützen zu den Regalböden geführt und dann von da aus zu eventuellen Verbrauchern auf den Regalböden. Die Stromzuführung ist bei bekannten Regalen aber typischerweise unflexibel und auf eine bestimmte Ausgestaltung des Regals angepasst. Bei einem Umbau des Regals muss die Verstromung zumeist aufwendig neu verlegt werden. Dabei ist es häufig auch schwierig, eine saubere beziehungsweise durchgängige Stromführung bis auf das Regal sicher zu stellen.

Da mit den bekannten Regalsystemen ein Auf-, Um- und Abbau von Möbeln wie erwähnt aufwendig ist und bei unsachgemässer Ausführung ein Sicherheitsrisiko stellen kann, wird heutzutage häufig davon abgesehen, die Möblierung bei sich ändernden Bedürfnissen anzupassen.

Aufgabe der nachfolgenden Erfindung ist es daher, ein System vorzuschlagen, mit dem es auf einfache Weise möglich ist, werkzeuglos oder ausschliesslich mit herkömmlichen einfachen Werkzeugen, flexibel Regale oder Regalstrukturen zu erstellen beziehungsweise umzubauen, die ausreichend robust sind und Sicherheit bieten, dass sie beispielsweise für Büros oder Verkaufsgeschäfte geeignet sind. Insbesondere soll das System ermöglichen, Regale beziehungsweise Gestelle flexibel, effizient und sicher auf-, um- und abzubauen.

### Darstellung der Erfindung

Die Aufgabe wird erfindungsgemäss durch eine Verbindungseinrichtung gelöst, wie sie im unabhängigen Anspruch 1 definiert ist, sowie durch ein Struktursystem, wie es im unabhängigen Anspruch 14 definiert ist, und ein Regal, wie es im unabhängigen Anspruch 15 definiert ist. Vorteilhafte Ausführungsvarianten der Erfindung ergeben sich aus den abhängigen Ansprüchen.

Das Wesen der Erfindung besteht im Folgenden: Eine Verbindungseinrichtung ist zur Montage eines Regalbodens beziehungsweise eines Regalbodenrahmens an einer mit zumindest einer sich axial erstreckenden Reihe von Lochungen ausgestatteten Vertikalstütze zum Aufbau eines Regals vorgesehen.

Der Begriff "Regal" bezieht sich in diesem Zusammenhang auf ein Möbel beziehungsweise eine möbelartige Konstruktion, die über pfostenartige oder wandartige Vertikalstützen verbundene Regalböden aufweist. Dabei kann das Regal als Strukturmöbel zur Gestaltung und Einteilung von Räumen eingesetzt werden. Regale können beispielsweise als freistehende Möbel oder zum Anlehnen an Wände vorgesehen sein. Sie können als offene oder als zumindest teilweise geschlossene Konstruktionen realisiert sein.

Die Vertikalstütze kann einen Rohrkörper aufweisen. Dabei kann der Rohrkörper beispielsweise als Vierkantrohr geformt sein. Mit Vorteil ist er aber im Wesentlichen als Rundrohr ausgebildet. Solche Rundrohre sind typischerweise zylindrisch mit einem hohlen Innenraum und einer Wandung. Dabei kann die Dicke der Wandung beziehungsweise die Wandstärke des Rundrohrs auf den vorgesehenen Einsatzzweck angepasst sein. Insbesondere kann sie so ausgebildet sein, dass das Rundrohr ausreichend robust ist, um über die Verbindungseinrichtung oder mehrere solche Verbindungseinrichtungen am Rundrohr befestigte Regalelemente wie Regalböden zu tragen beziehungsweise zu stützen. Um ausreichend Lasten tragen zu können und Stabilität aufzuweisen, ist der Rohrkörper mit Vorteil aus einem robusten Material hergestellt. Beispielsweise kann der Rohrkörper aus Eisen beziehungsweise Stahl hergestellt sein. Aus ästhetischen Gründen kann der Rohrkörper auch gefärbt wir beispielsweise pulverbeschichtet sein.

Die Lochungen können in einfacher und zweckmässiger Ausführung als Bohrungen beziehungsweise Öffnungen im Rohrkörper vorgesehen sein. Dabei können sie mit einem geraden beziehungsweise horizontalen unteren Rand geformt sein, damit der oder die Einhänger stabil und sicher eingehängt werden können. Beispielsweise können die Lochungen einen rechteckigen oder quadratischen Querschnitt aufweisen.

Der Begriff "axial" im Zusammenhang mit der zumindest einen Reihe von Lochungen bezieht sich insbesondere auf ein Erstrecken entlang der Vertikalstütze beziehungsweise entlang einer Längsachse der typischerweise längsförmigen Vertikalstütze. Dabei befinden sich die Lochungen typischerweise in regelmässigen Abständen zueinander auf einer Geraden, die parallel zu oder auf der Längsachse der Vertikalstütze liegt.

Die erfindungsgemässe Verbindungseinrichtung umfasst einen Einhänger und eine Konsole. Der Einhänger umfasst einen Grundkörper, der einen Eingreifabschnitt und einen Tragabschnitt aufweist. Dabei ist der Grundkörper zum Einhängen in eine der Lochungen der Vertikalstütze ausgebildet, sodass der Eingreifabschnitt eine der Lochungen der Vertikalstütze hintergreift und der Tragabschnitt ausserhalb der einen der Lochungen der Vertikalstützen angeordnet ist.

Die Konsole umfasst einen Gehäuseabschnitt, der eine zum Anliegen an die Vertikalstütze ausgebildete Frontfläche und eine zum Aufnehmen des Tragabschnitts des Grundkörpers des Einhängers geformte Kavität aufweist. Die Konsole ist ferner mit einem Spannmechanismus ausgestattet.

Die Konsole kann direkt in einen Regalboden beziehungsweise Regalbodenrahmen integriert sein. Oder sie kann als ein Bauteil eines Regalbodens beziehungsweise Regalbodenrahmens ausgestaltet sein. Beispielsweise kann die Konsole als Ecke beziehungsweise Montageecke eines Regalbodenrahmens konfiguriert sein. Regalbodenrahmen können insbesondere dazu vorgesehen sein, mit einem Regalboden belegt zu werden, auf den dann Gegenstände wie Verkaufs- oder Präsentationswaren aufgelegt werden können.

Die Frontfläche des Gehäuseabschnitts der Konsole kann zum Anliegen an die Vertikalstütze ausgebildet sein, indem es der Form der Vertikalstütze entsprechend geformt ist. Beispielsweise kann die Frontfläche zylindersegmentartig, konkav geformt sein, wenn die Vertikalstützen rundrohrförmig ist. Die Frontfläche ermöglicht, dass die Konsole stabil von aussen an der Vertikalstützen beziehungsweise ihrer Wandung anliegt. Dabei kann die Frontfläche ausreichend gross bemessen sein, damit sie zum Verspannen der Konsole mit der Vertikalstütze gegen die Vertikalstütze gedrückt beziehungsweise gepresst werden kann.

Die Kavität des Gehäuseabschnitts der Konsole kann entsprechend dem Tragabschnitt des Grundkörpers des Einhängers geformt sein. Dabei kann sie den Tragabschnitt zumindest teilweise bündig umgreifen. Das Aufnehmen des Tragabschnitts in die Kavität erfolgt vorteilhafterweise quasi vertikal von oben nach unten. So kann die Konsole auf dem Einhänger aufliegen beziehungsweise von diesem getragen sein. Die Kavität ist also mit Vorteil in bestimmungsgemässer Ausrichtung nach unten offen beziehungsweise von unter her zugänglich.

Der Spannmechanismus ist dazu ausgebildet, den Gehäuseabschnitt der Konsole mit der Vertikalstütze zu verspannen, wenn die Kavität des Gehäuseabschnitts der Konsole den Tragabschnitt des Grundkörpers des Einhängers aufnimmt und der Grundkörper des Einhängers in die eine der Lochungen der Vertikalstütze eingehängt ist.

Das Verspannen des Gehäuseabschnitts der Konsole mit der Vertikalstütze kann auf unterschiedlich Art und Weise erfolgen. In einer effizienten Ausführung erfolgt es dadurch, dass die Konsole gegen die Vertikalstütze gedrückt wird. Dabei wird insbesondere die Frontfläche des Gehäuseabschnitts der Konsole gegen die Vertikalstütze beziehungsweise ihre Wandung gedrückt. So kann ein flächiger Kontakt erzeugt werden, der Konsole und Vertikalstütze stabil miteinander verbindet.

Der Spannmechanismus ermöglicht also ein verwindungssteifes und stabiles Verbinden der Konsole mit der Vertikalstütze. Wird beispielsweise der Regalboden beziehungsweise der Regalbodenrahmen mit mehreren wie beispielsweise vier solchen Konsolen ausgestattet, so kann eine stabile Verbindung mit entsprechend mehreren beziehungsweise vier Vertikalstützen erzeugt werden, sodass ein robuster Aufbau als Möbel beziehungsweise Regal erreicht werden kann. Weitere Verstrebungen oder Stabilisierungen zusätzlich zum Regalboden beziehungsweise Regalbodenrahmen oder mit Vorteil mehrere solchen Regalböden beziehungsweise Regalbodenrahmen werden nicht benötigt. So kann sehr effizient ein stabiles zur Aufnahme von vergleichsweise grossen Lasten ausgebildetes Regal aufgebaut werden. Auch ermöglicht dies einen vergleichsweise einfachen Um-, An- oder Abbau des Regals, sodass effizient und flexibel Regalstrukturen geschaffen werden können. Zudem können solche Regale ästethisch ansprechend gestaltet sein.

Vorzugsweise ist die Kavität des Gehäuseabschnitts der Konsole mit einer ersten Koppelstruktur ausgestattet ist und der Tragabschnitt des Grundkörpers des Einhängers mit einer zweiten Koppelstruktur, wobei die erste Koppelstruktur und die zweite Koppelstruktur ineinandergreifen, wenn die Kavität des Gehäuseabschnitts der Konsole den Tragabschnitt des Grundkörpers des Einhängers aufnimmt und der Grundkörper des Einhängers in die eine der Lochungen der Vertikalstütze eingehängt ist.

Solche Koppelstrukturen ermöglichen zumindest in bestimmten Richtungen eine formschlüssige Verbindung zwischen Konsole und Einhänger. Insbesondere kann mit solchen Koppelstrukturen erreicht werden, dass die Konsole gegen ein Bewegen der Konsole weg von der Vertikalstütze durch einen Formschluss blockiert ist. So kann ein sicheres Montieren der Konsole an der Vertikalstütze über den Einhänger erreicht werden.

Dabei ist vorzugsweise die erste Koppelstruktur der Kavität des Gehäuseabschnitts der Konsole als ein Vorsprung ausgebildet und die zweite Koppelstruktur des Tragabschnitts des Grundkörpers des Einhängers als eine Nut. Eine solche Ausbildung als Nut und Vorsprung kann eine effiziente Realisierung der Koppelstrukturen ermöglichen. Dabei ist die Nut mit Vorteil so am Tragabschnitt des Grundkörpers des Einhängers ausgebildet, dass sie an einer Oberseite des Grundkörpers liegt, wenn der Grundkörper des Einhängers in die eine der Lochungen der Vertikalstütze eingehängt ist. Gleichzeitig ist der Vorsprung mit Vorteil so ausgebildet, dass er sich von oben her in die Kavität hinein erstreckt, wenn die Kavität des Gehäuseabschnitts der Konsole den Tragabschnitt des Grundkörpers des Einhängers aufnimmt. So kann auf effiziente Weise erreicht werden, dass die Nut und der Vorsprung ineinandergreifen, wenn die Konsole von oben auf den in die Vertikalstütze eingesetzten Einhänger aufgesetzt wird. Der Vorsprung kann als Wölbung, Nase oder etwas Ähnliches ausgestaltet sein.

Der Spannmechanismus der Konsole umfasst ein Krallenteil mit einer ersten Kralle, der Tragabschnitt des Grundkörpers des Einhängers ist mit einer zweiten Kralle ausgestattet, und die erste Kralle des Krallenteils des Spannmechanismus der Konsole und die zweite Kralle des Tragabschnitts des Grundkörpers des Einhängers greifen ineinander, wenn die Kavität des Gehäuseabschnitts der Konsole den Tragabschnitt des Grundkörpers des Einhängers aufnimmt und der Grundkörper des Einhängers in die eine der Lochungen der Vertikalstütze eingehängt ist.

Der Begriff "Kralle" bezieht sich im Zusammenhang mit dem Krallenteil und dem Einhänger auf eine Struktur, die ein Ineinander-Greifen ermöglicht. Dabei kann diese Struktur am Krallenteil beziehungsweise am Tragabschnitt ausgeformt sein. Die Kralle kann nasen-, finger- oder zahnartig oder in einer ähnlichen Art ausgebildet sein.

Mittels des Krallenteils kann der Spannmechanismus auf effiziente Art und Weise eine Spannwirkung zwischen der Konsole und der Vertikalstütze via Einhänger erzeugen. Beispielsweise kann das Krallenteil zur Konsole beziehungsweise weg von der Vertikalstütze gezogen werden. Indem die erste Kralle und die zweite Kralle ineinandergreifen, kann ein Zug auf den Einhänger erzeugt werden, der wiederum vom Einhänger auf die Vertikalstütze übertragen wird. Auf diese Weise kann die Konsole effizient an die Vertikalstütze gezogen werden, sodass die Frontfläche an die Vertikalstütze gedrückt beziehungsweise gepresst wird.

Dabei ist das Krallenteil des Spannmechanismus der Konsole vorzugsweise im Gehäuseabschnitt der Konsole angeordnet und relativ zum Gehäuseabschnitt der Konsole bewegbar. So kann erreicht werden, dass das Krallenteil geschützt beziehungsweise ungehindert bewegt werden kann, um den erwähnten Zug auf den Einhänger zu erzeugen.

Der Spannmechanismus der Konsole weist dabei vorzugsweise ein Betätigungselement auf, das dazu ausgebildet ist, bei einer Betätigung das Krallenteil so zu bewegen, dass die erste Kralle des Krallenteils des Spannmechanismus der Konsole und die zweite Kralle des Tragabschnitts des Grundkörpers des Einhängers gegeneinander gedrückt werden. Die Bewegung kann insbesondere eine lineare Bewegung sein. Über das Betätigungselement kann die Konsole effizient an den Einhänger und über diesen auch an die Vertikalstütze gezogen beziehungsweise gedrückt werden. So können Konsole und Vertikalstütze sicher verspannt werden.

Das Betätigungselement des Spannmechanismus der Konsole ist vorzugsweise mit einem Gewinde und das Krallenteil des Spannmechanismus der Konsole mit einem dem Gewinde entsprechenden Gegengewinde ausgestattet, sodass ein Verdrehen des Gewindes zum Gegengewinde das Krallenteil relativ zum Gehäuseabschnitt der Konsole bewegt. Das Betätigungselement kann insbesondere im Wesentlichen schraubenförmig ausgestaltet sein. In einer solchen Ausführung ist das Gewinde ein Aussengewinde und das Gegengewinde ein korrespondierendes Innengewinde. Über solche ineinander verlaufende Gewinde kann über eine Drehbewegung des Betätigungselements eine lineare Bewegung des Krallenteils erzeugt werden. Insbesondere ermöglicht ein solches Verschrauben ein einfaches Aufbringen einer vergleichsweise hohen Zugkraft auf das Krallenteil.

Das Betätigungselement des Spannmechanismus der Konsole ist vorzugsweise in einer Spannbewegungsrichtung ortsfest mit dem Gehäuseabschnitt der Konsole verbunden. Die Spannbewegungsrichtung kann eine Gerade sein beziehungsweise auf einer Geraden liegen. Mit Vorteil ist die Spannbewegungsrichtung eine Richtung auf die Vertikalstütze zu. Beispielsweise kann sie radial zur Vertikalstütze verlaufen, wenn diese rundrohrförmig ist. Das Betätigungselement kann in einer anderen Bewegungsrichtung beziehungsweise in einem anderen Freiheitsgrad zum Gehäuseabschnitt beweglich sein. Beispielsweise kann das Betätigungselement zum Gehäuseabschnitt drehbeziehungsweise rotierbar sein, aber nicht in die Spannbewegungsrichtung oder linear frei beweglich. Auf diese Weise kann das Betätigungselement die Bewegung des Krallenteils relativ zum Gehäuseabschnitt erzeugen.

Die Konsole umfasst vorzugsweise eine Abdeckung, die das Krallenteil im Gehäuseabschnitt der Konsole hält. Die Abdeckung kann auch andere Bauteile halten, die im Innern des Gehäuseabschnitts angeordnet sind, wie beispielsweise die nachstehend beschriebenen Kontaktier- und Federelemente. Eine solche Abdeckung ermöglicht eine einfache Konstruktion der Konsole. Insbesondere kann die Konsole je nach Bedarf mit passenden Bauteilen ausgestattet und mittels der Abdeckung abgeschlossen sein.

Dabei ist das Betätigungselement des Spannmechanismus der Konsole vorzugsweise an der Abdeckung der Konsole montiert. So kann auf effiziente Weise eine zweckmässige zumindest teilweise ortsfeste Verbindung zwischen Betätigungselement und Gehäuseabschnitt erzeugt werden.

Bevorzugt weist der Grundkörper des Einhängers eine Vorderseite und eine Rückseite auf, die Vorderseite des Grundkörpers des Einhängers liegt im Innern der Vertikalstütze, wenn der Grundkörper des Einhängers in die eine der Lochungen der Vertikalstütze eingehängt ist, die Rückseite des Grundkörpers des Einhängers liegt der Vertikalstütze abgewandt, wenn der Grundkörper des Einhängers in die eine der Lochungen der Vertikalstütze eingehängt ist, und der Einhänger ist dazu ausgebildet, Strom von der Vorderseite des Grundkörpers zur Rückseite des Grundkörpers zu leiten.

Mit einem solchen Einhänger kann auf effiziente Weise Strom vom Innern des Vertikalrohrs zur Konsole geleitet werden. Von der Konsole kann der Strom dann an einen Verbraucher wie beispielsweise eine Leuchte geleitet werden. Insbesondere ermöglicht ein solcher Einhänger in Kombination mit dem Spannmechanismus ein sicheres und zuverlässiges Abgreifen von Strom in der Vertikalstütze. Beispielsweise kann dies durch eine vergleichsweise genaue und fixierte Positionierung der Konsole zur Vertikalstütze mittels des Spannmechanismus erreicht werden.

Vorzugsweise umfasst der Einhänger dabei ein Kontaktierelement, das aus einem elektrisch leitenden Material hergestellt ist, der Grundkörper weist einen Innenraum auf, der über eine Vorderöffnung zur Vorderseite hin und über eine Rücköffnung zur Rückseite hin geöffnet ist, und das Kontaktierelement ist im Innenraum des Grundkörpers angeordnet, sodass das Kontaktierelement durch die Vorderöffnung ragt und durch die Rücköffnung zugänglich ist. Der Grundkörper ist dabei mit Vorteil zum Kontaktierelement hin elektrisch isoliert. Die kann dadurch erfolgen, dass der Grundkörper selbst aus einem elektrisch isolierenden Material hergestellt ist oder dass eine Isolationsschicht zwischen Grundkörper und Kontaktierelement angeordnet ist. Das Kontaktierelement kann ein Kontaktierstift sein. Der Kontaktierstift kann beispielsweise aus einem Metall wie Kupfer hergestellt sein. Ein solcher Einhänger ermöglicht einerseits ein abgesichertes Abgreifen von Strom im Innern des Vertikalrohrs, ohne dass ein Kontakt mit einer Person möglich ist. Zudem ermöglicht er auch, dass ein von äusseren Einflüssen geschütztes Abgreifen des Stroms, sodass der Strom zuverlässig abgeführt werden kann.

Dabei ist das Kontaktiertierelement des Einhängers vorzugsweise so im Innenraum des Grundkörpers des Einhängers angeordnet, dass es in einer Kontaktierbewegungsrichtung relativ zum Grundkörper des Einhängers bewegbar ist. Die Kontaktierbewegungsrichtung und die Spannbewegungsrichtung können identisch sein. Insbesondere können Grundkörper und Kontaktierelement so ausgebildet sein, dass sie in einem vordefinierten Umfang zueinander bewegt werden können.

Bevorzugt weist die Konsole einen Stromabgreifer auf, der im Gehäuseabschnitt der Konsole angeordnet ist und relativ zum Gehäuseabschnitt der Konsole bewegbar ist. Der Stromabgreifer kann ein eigenes Bauteil sein. Beispielsweise kann er einen Körper aus einem elektrisch isolierenden Material umfassen, an dem einer oder mehrere Kontakte angebracht sind. Die Kontakte können mit Kabeln oder ähnlichen Leitern verbunden sein, die den Strom von den Kontakten an eine Stelle leiten, an der er von einem Verbraucher abgegriffen werden kann. Über die Bewegbarkeit des Stromabgreifers kann dieser an das Kontaktierelement angedrückt werden, was eine effiziente sichere Kontaktierung zwischen Kontaktierelement und Stromabgreifer ermöglicht. Zudem kann so mittels des Stromabgreifers das Kontaktierelement zur Kontaktierung im Innern des Vertikalrohrs gedrückt werden.

Dabei umfasst die Konsole vorzugsweise ein Federelement, das den Stromabgreifer der Konsole gegen den Einhänger drückt, wenn die Kavität des Gehäuseabschnitts der Konsole den Tragabschnitt des Grundkörpers des Einhängers aufnimmt. Das Federelement kann beispielsweise eine Feder wie eine Spiralfeder umfassen.

Das Federelement der Konsole drückt vorzugsweise den Stromabgreifer der Konsole durch die Rücköffnung des Grundkörpers gegen das Kontaktierelement des Einhängers. Dadurch kann das Kontaktierelement maximal in die Kontaktierbewegungsrichtung bewegt und auch gedrückt werden. So kann das Kontaktierelement auf effiziente Weise gegen eine Leiterbahn im Innern der Vertikalstütze gedrückt werden. Auf diese Weise kann eine besonders sichere und zuverlässige Kontaktierung erreicht werden.

Das Kontaktierelement des Einhängers weist bevorzugt eine erste Schrägfläche und der Stromabgreifer der Konsole eine gegenläufig zur ersten Schrägfläche ausgebildete zweite Schrägfläche auf. Die Schrägflächen sind so angeordnet, dass sie aneinander anliegen, wenn die Kavität des Gehäuseabschnitts der Konsole den Tragabschnitt des Grundkörpers des Einhängers aufnimmt. Solche Schrägflachen ermöglichen ein zunehmendes Drücken des Kontaktierelements und des Stromabgreifers während dem Aufnehmen beziehungsweise der Montage des Grundkörpers in der Kavität. Dadurch kann eine sichere Kontaktierung zwischen Kontaktierelement und Stromabgreifer und gleichzeitig ein zuverlässiges Andrücken des Kontaktierelements innerhalb der Vertikalstrebe erreicht werden.

Vorzugsweise ist der Gehäuseabschnitt der Konsole mit zwei Steckabschnitten zum Aufstecken jeweils einer Strebe ausgestattet, wobei die Steckabschnitte in einem quasi rechten Winkel zueinander verlaufen. Eine solche Konsole kann auf effiziente Weise als Ecke eines Regalbodenrahmens eingesetzt werden. Die Streben können beispielsweise als Vierkantrohre ausgebildet sein.

Dabei umfasst der Gehäuseabschnitt der Konsole vorzugsweise einen die Kavität und die Frontfläche aufweisenden Fortsatz, der sich etwa entlang einer Winkelhalbierenden eines Aussenwinkels - beispielsweise von quasi 270° der beiden Steckabschnitte - erstreckt. So kann die Konsole quasi Y-förmig geformt sein. Mit einem solchen Fortsatz kann die Kavität gut zugänglich sein, sodass die Konsole einfach und effizient am Einhänger befestigt werden kann. Auch können auf diese Weise die Streben eines Regalbodenrahmens nach innen versetzt sein. Dabei kann in einem Regal, das aus Vertikalstützen und mittels der Konsole aufgebaute Regalbodenrahmen aufgebaut ist, wobei die Regalbodenrahmen über jeweils einen Einhänger an den Vertikalstützen befestigt sind, sodass jeweils zwei benachbarte Vertikalstützen eine Stützenebene definieren, erreicht werden, dass die Regalbodenrahmen ausserhalb der durch die mit ihnen verbundenen Vertikalstützen definierten Stützenebenen liegen. Indem die Regalbodenrahmen ausserhalb der Stützebenen liegen, kann erreicht werden, dass ganze Rahmen an mehreren Vertikalstützen gleichzeitig befestigt werden können. Dies ermöglicht ein einfacheres und effizienteres auf- und umbauen eines Regals beziehungsweise Möbels. Zudem ermöglicht dies eine vergleichsweise stabile Konstruktion. Weiter kann die Vielseitigkeit der Zusammenbaumöglichkeiten erhöht werden, da die Rahmen zwischen zwei Vertikalstützen hindurchragend und mit anderen Vertikalstützen verbunden werden können.

Bevorzugt weist der Eingreifabschnitt des Einhängers einen Hakenbereich auf, der dazu ausgebildet ist, in die eine der Lochungen der Vertikalstütze eingehängt zu werden. Insbesondere kann durch den Hakenbereich der Eingreifabschnitt einen unteren Rand der Lochung umgreifen, sodass der Einhänger die Lochung hintergreift und sicher an der Vertikalstütze befestigt ist.

Dabei weist der Eingreifabschnitt des Einhängers vorzugsweise einen sich entgegen dem Hakenbereich erstreckenden Zungenbereich auf, der dazu ausgebildet ist, an einer Wandung der Vertikalstützen anzuliegen, wenn der Grundkörper des Einhängers in die eine der Lochungen der Vertikalstütze eingehängt ist. Mittels der Haken- und Zungenbereiche des Eingreifabschnitts, kann der Einhänger auf einfache Weise stabil und fest an der Vertikalstütze montiert werden. Dabei kann er gleichzeitig mit dem Hakenbereich den unteren Rand der einen der Lochungen der Vertikalstütze umgreifen und so daran aufgehängt sein und mit dem Zungenbereich an der Rückseite der den oberen Rand der Lochung bildenden Wandung abstützen.

In einem anderen Aspekt betrifft die Erfindung ein Struktursystem zum modularen Aufbau von Regalen. Das Struktursystem umfasst zumindest eine Vertikalstütze und zumindest eine Verbindungseinrichtung, wie sie vorstehen beschrieben ist. Die Vertikalstütze ist mit zumindest einer sich axial erstreckenden Reihe von Lochungen ausgestattet.

Das erfindungsgemäss Struktursystem und seine nachstehend beschriebenen bevorzugten Ausführungsformen ermöglicht eine effiziente Realisierung der vorstehend im Zusammenhang mit der erfindungsgemässen Verbindungseinrichtung und seiner bevorzugten Ausführungsformen beschriebenen Effekte und Vorteile. Insbesondere kann das Struktursystem als ein Regal- beziehungsweise Möbelbausatz dienen, aus dem flexibel und in einfacher Weise Regale auf-, um- und abgebaut werden können.

Das Struktursystem kann insbesondere ein System zum modularen Aufbau von Regalen betreffen. Dabei kann es zum flexiblen Auf-, Um-, Aus- und Abbau von Regalen oder ähnlichen Möbeln je nach Bedarf mit Bauteilen unterschiedlicher Grösse und Ausführung vorgesehen sein. Auch können die mit dem Struktursystem aufgebauten Strukturen beziehungsweise Regale oder ähnliche Möbel zum Aufteilen oder Strukturieren eines Raumes verwendet werden. Das Struktursystem kann auch als Regalbausatz bezeichnet werden.

Bevorzugt weist die zumindest eine Vertikalstütze einen hohlen Rohrkörper und ein mit zumindest einer Leiterbahn ausgestattetes Stromprofil auf, der Rohrkörper ist mit der zumindest einen Reihe von Lochungen ausgestattet ist, und das Stromprofil ist innerhalb des Rohrkörpers angeordnet, sodass sich die zumindest eine Leiterbahn entlang des Rohrkörpers erstreckt.

Die Leiterbahn kann eine beliebige Bahn, Spur, Kabel oder ähnliche Struktur aus einem elektrisch leitenden Material sein. Beispielsweise kann die Leiterbahn ein verhältnismässig schmaler Streifen aus einem Metall wie beispielsweise Kupfer sein.

Das Stromprofil dient insbesondere zum Tragen beziehungsweise Halten und Ausrichten der Leiterbahn(en). Es kann mit einer einzigen Leiterbahn ausgestattet sein. Vorteilhafterweise umfasst es aber zwei, beispielsweise parallel zueinander verlaufende Leiterbahnen. Die beiden Leiterbahnen können im Betrieb unterschiedliche Polaritäten aufweisen.

Das Stromprofil kann einen längsförmigen Träger umfassen, entlang dem die Leiterbahn verläuft. Der Träger kann aus einem ausreichend stabilen Material hergestellt sein, das eine effiziente Herstellung des Stromprofils ermöglicht. Beispielsweise kann er aus Aluminium oder einem Kunststoff hergestellt sein.

Dabei kann der Träger aus Sicherheitsgründen auch aus einem elektrisch isolierenden Material hergestellt sein. Das Stromprofil kann jedoch mit Vorteil eine Isolationsbasis umfassen, wobei die Isolationsbasis sich entlang des Trägers erstreckend am Träger befestigt ist und die Leiterbahn sich entlang der Isolationsbasis erstreckend an der Isolationsbasis befestigt ist, sodass sie von der Isolationsbasis zum Träger hin isoliert ist. Mit einer solchen Ausgestaltung des Stromprofils können dessen Funktionen in bevorzugter und spezifischer Weise implementiert sein. Insbesondere kann der Träger durch die Auswahl eines geeigneten Materials wie beispielsweise Aluminium eine ausreichende Stabilität und saubere Führung der Leiterbahn gewährleisten. Gleichzeitig kann die Isolationsbasis ohne Einschränkung beispielsweise aufgrund mechanischer Anforderung gewählt und auf ein effizientes Isolieren angepasst sein.

Vorzugsweise umfasst das Struktursystem zumindest drei weitere Vertikalstützen mit jeweils zumindest einer sich axial erstreckenden Reihe von Lochungen, zumindest sieben weitere Verbindungseinrichtung der oben beschriebenen Art und zumindest acht Streben, wobei jeweils vier Streben mit vier Konsolen von Verbindungseinrichtungen einen Regalbodenrahmen bilden, indem jeweils zwei Streben über eine der Konsolen miteinander verbunden sind.

Die Regalbodenrahmen können quasi als Rechtecke ausgebildet sein, indem jede der Konsolen jeweils zwei Streben rechtwinklig miteinander verbindet. Dabei können alle Streben eines Rahmens gleich lang sein oder jeweils zwei gegenüberliegende zwei Streben kürzer und zwei andere gegenüberliegenden Streben länger. Rechteckig in dem erwähnten Sinn kann also auch quadratisch sein. Die Streben können balkenartig beziehungsweise rohrartig ausgebildet sein. Insbesondere können sie als Vierkantrohre beispielsweise aus Metall oder einem festen Kunststoff hergestellt sein.

Das Struktursystem kann auch einen Satz Böden umfassen, die jeweils dazu ausgestaltet sind, auf einen der Regalbodenrahmen aufgelegt zu werden, wenn dieser an Vertikalstützen montiert ist. Der Begriff "Auflegen" bezieht sich in diesem Zusammenhang auf ein beliebiges loses, fixiertes, verbundenes oder sonstiges Positionieren eines Bodens auf einem der Rahmen. Solche Böden können in vielen Anwendungen zweckmässig sein. Insbesondere können sie zum Aufstellen von Waren oder anderen Gütern dienen. Die Böden können aus unterschiedlichen Materialien wie beispielsweise Glas, Holz, Metall oder Kunststoff hergestellt sein. Dabei kann das Material aus ästhetischen und/oder funktionalen Gesichtspunkten gewählt werden.

Die Böden sind dabei vorzugsweise jeweils im Wesentlichen rechteckig. Der Begriff "rechteckig" im Zusammenhang mit den Böden umfasst auch quadratische Formen. Solche rechteckigen Böden ermöglichen in vielen Anwendungen einen einfachen und zweckmässigen Aufbau.

Die Vertikalstützen können zumindest eine Vertikalstütze umfassen, die eine Mehrzahl von sich axial erstreckender Reihen von Lochungen aufweist. Insbesondere können mehreren Reihen von Lochungen an unterschiedlichen Seiten der Vertikalstütze ausgebildet sein. So können Rahmen an verschiedenen Seiten an der Vertikalstütze befestigt werden, was den Aufbau von vergleichsweise grossen beziehungsweise komplexen Regalen oder ähnlichen Möbeln ermöglicht.

Die Vertikalstützen können im Querschnitt jeweils einen kreisförmigen Aussenumfang aufweisen. Der Querschnitt kann dabei insbesondere quasi rechtwinklig zu einer Längsachse der zugehörigen Vertikalstütze liegen. Dabei können die Vertikalstützen jeweils einen rundrohrförmigen Rohrkörper umfassen. Solche rundrohrförmigen Vertikalstützen können eine vergleichsweise hohe Stabilität aufweisen und vergleichsweise schlank erscheinen, was aus ästhetischen Gründen gewünscht sein kann.

Die Böden können jeweils vier Ecken umfassen, die jeweils dazu ausgebildet sind, eine der Vertikalstützen teilweise zu umgreifen. Die Ecken der Böden können die zugehörigen Vertikalstützen jeweils zu etwa einem Viertel deren Umfänge umgreifen. Solche Böden ermöglichen des Bereitstellen einer vergleichsweise grossen Auflagefläche.

In einem weiteren anderen Aspekt betrifft die Erfindung ein Regal, das aus einem Struktursystem, wie es oben beschrieben ist, aufgebaut ist. Ein solches Regal ermöglicht ein effizientes Implementieren der oben im Zusammenhang mit dem erfindungsgemässen Struktursystem und seinen bevorzugten Ausführungsformen beschriebenen Effekte und Vorteile.

### Kurze Beschreibung der Zeichnungen

Weitere vorteilhafte Ausgestaltungen der Erfindung ergeben sich aus der nachfolgenden Beschreibung von Ausführungsbeispielen der Erfindung mithilfe der schematischen Zeichnung. Insbesondere werden im Folgenden die erfindungsgemässe Verbindungseinrichtung, das erfindungsgemässe Struktursystem und das erfindungsgemässe Regal unter Bezugnahme auf die beigefügten Zeichnungen anhand von Ausführungsbeispielen detaillierter beschrieben. Es zeigen:
- Fig. 1: eine perspektivische Explosionsansicht eines Ausführungsbeispiels einer erfindungsgemässen Verbindungseinrichtung;
- Fig. 2: eine perspektivische Ansicht eines ersten Ausführungsbeispiels eines erfindungsgemässen Regals ohne Böden, das aus einem Ausführungsbeispiel eines erfindungsgemässen Struktursystems aufgebaut ist;
- Fig. 3: eine perspektivische Ansicht des Details A von Fig. 2;
- Fig. 4: eine perspektivische Ansicht des Details B von Fig. 2;
- Fig. 5: eine Querschnittsansicht der Verbindungseinrichtung von Fig. 1 beim Verbinden eines Regalbodenrahmens des Struktursystems von Fig. 2, bevor eine Konsole einen Grundkörper eines Einhängers aufnimmt, wobei insbesondere mechanische Aspekte des Verbindens dargestellt sind;
- Fig. 6: die Querschnittsansicht von Fig. 5 während die Konsole den Grundkörper des Einhängers aufnimmt;
- Fig. 7: die Querschnittsansicht von Fig. 5, bei der die Konsole den Grundkörper des Einhängers aufgenommen hat;
- Fig. 8: eine Querschnittsansicht der Verbindungseinrichtung von Fig. 1 beim Verbinden des Regalbodenrahmens des Struktursystems von Fig. 2, bevor die Konsole den Grundkörper des Einhängers aufnimmt, wobei insbesondere elektrische Aspekte des Verbindens dargestellt sind;
- Fig. 9: die Querschnittsansicht von Fig. 8 während die Konsole den Grundkörper des Einhängers aufnimmt;
- Fig. 10: die Querschnittsansicht von Fig. 8, bei der die Konsole den Grundkörper des Einhängers aufgenommen hat;
- Fig. 11: eine perspektivische Ansicht eines zweiten Ausführungsbeispiels eines erfindungsgemässen Regals ohne Böden, das aus dem Struktursystem von Fig. 2 aufgebaut ist; und
- Fig. 12: eine perspektivische Ansicht des Regals von Fig. 7 mit zugehörigen Böden.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Fig. dargestellt verwendet. Diese räumlichen Relativangaben umfassen auch andere Positionen und Ausrichtungen als die in den Fig. dargestellten. Zum Beispiel wenn ein in den Fig. dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Fig. und der zugehörigen Beschreibung der verschiedenen Aspekte und Ausführungsbeispiele zu vermeiden, sollen bestimmte Merkmale als gemeinsam für verschieden Aspekte und Ausführungsbeispiele verstanden werden. Das Weglassen eines Aspekts in der Beschreibung oder einer Fig. lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. In diesem Zusammenhang gilt für die gesamte weitere Beschreibung folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Fig. stehen für ähnliche oder gleiche Elemente.

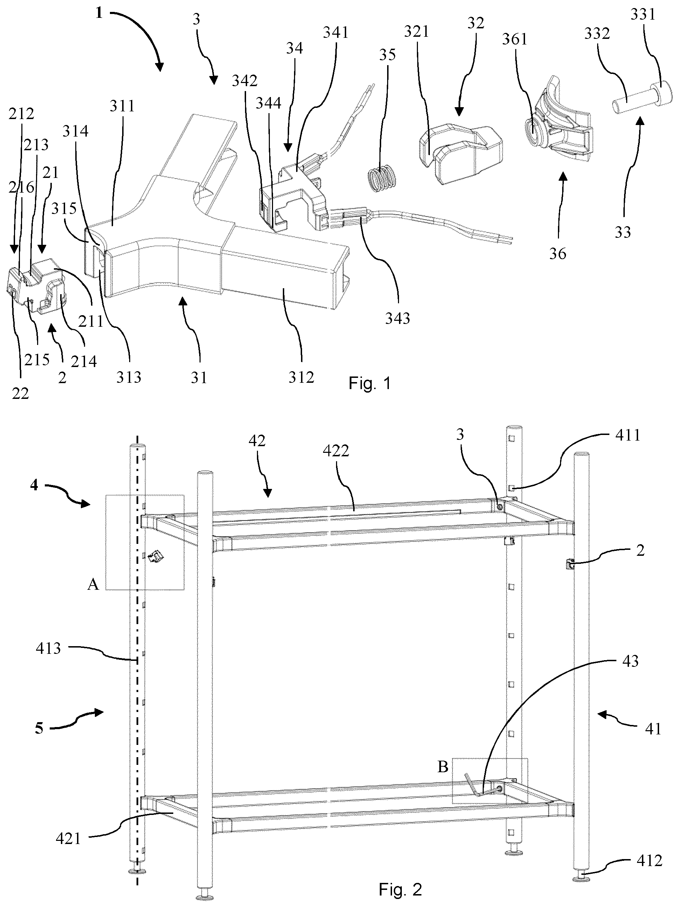

In Fig. 1 ist ein Ausführungsbeispiel einer erfindungsgemässen Verbindungseinrichtung 1 mit einem Einhänger 2 und einer Konsole 3 gezeigt. Der Einhänger 2 umfasst einen Grundkörper 21 und zwei darin angeordneten Kontaktierstifte 22 als Kontaktierelemente. Der Grundkörper 21 weist einen vorderen Eingreifabschnitt 212 und einen hinteren Tragabschnitt 211 auf. Der Eingreifabschnitt 212 weist einen unteren Hakenbereich 215 und einen oberen Zungenbereich 216 auf. Zwischen Eingreifabschnitt 212 und Tragabschnitt 211 ist an einer Oberseite des Grundkörpers 21 eine Nut 213 als zweite Kopplungsstruktur eingelassen. Im Bereich des Tragabschnitts 211 ist an beiden Seitenflächen des Grundkörpers 21 jeweils eine reliefartig vorstehende zweite Kralle 214 am Grundkörper 21 ausgeformt.

Die Konsole 3 ist aus sechs Bauteilen aufgebaut, nämlich - von links nach rechts - einem Gehäuse 31 als Gehäuseabschnitt, einem Stromabgreifer 34, einer Spiralfeder 35 als Federelement, einem Krallenteil 32 eines Spannmechanismus, einer Abdeckung 36 und einer Betätigungsschraube 33 als Betätigungselement des Spannmechanismus. Das Gehäuse 31 ist in einer Aufsicht quasi Y-förmig mit zwei rechtwinklig zueinander stehenden Steckabschnitten 312 und einem sich entlang einer Winkelhalbierenden eines Aussenwinkels der beiden Steckabschnitte 312 von etwa 270° erstreckenden Fortsatz 311 ausgestattet. Die Steckabschnitte 312 sind zum Aufstecken eines Vierkantrohrs geformt.

Ein den Steckabschnitten 312 abgewandtes Ende des Fortsatzes 211 bildet eine gekrümmte Frontfläche 315. Im Innern des Fortsatzes 311 ist eine Kavität 313 ausgebildet. Angrenzend an die Frontfläche 315 ragt ein Vorsprung 314 als erste Koppelstruktur in die Kavität 313 hinein. Die Kavität 313 ist nach unten und zur Frontfläche 314 hin geöffnet.

Der Stromabgreifer 34 umfasst einen in einer Aufsicht quasi T-förmigen und in einer Seitenansicht quasi hakenförmigen Körper 341 auf. Der Körper 341 ist aus einem elektrisch isolierenden Material hergestellt. An seiner dem Gehäuse 31 zugewandten Vorderseite ist der Körper 341 mit zwei elektrisch leitfähigen Kontakten 342 ausgestattet. Ausgehend von der Vorderseite weist der Körper 341 eine schräge Frontunterseite 344 als zweite Schrägfläche auf. Von einer dem Gehäuse 31 abgewandten Rückseite des Körpers 341 gehen zwei aufgesteckte Verbindungskabel 343 seitlich vom Körper 341 weg. Die Verbindungskabel 343 sind jeweils mit den Kontakten 342 elektrisch verbunden.

Das Krallenteil 32 ist in einer Aufsicht quasi U-förmig mit zwei über einen Zwischenbereich verbundenen Flügelbereichen ausgestaltet. An den Innenseiten der Flügelbereiche ist jeweils eine erste Kralle 321 reliefartig ausgeformt. Der Zwischenbereich ist mit einer Bohrung (in Fig. 1 nicht sichtbar) versehen, die mit einem Innengewinde als Gegengewinde ausgestattet ist.

Die Abdeckung 36 ist in einer Aufsicht quasi bogenförmig passend zu einer Rückseite des Gehäuses 31 geformt. Mittig weist die Abdeckung 36 eine Durchgangsbohrung auf, die einen Schraubenkopfsitz 361 bildet. Die Schraube 33 weist einen zylindrischen Schaft 332 und einen daran anschliessenden Kopf 331 auf. Kopf 331 und Schaft 332 sind so dimensioniert, dass der Schaft 332 durch die Durchgangsbohrung der Abdeckung 36 hindurch passt, der Kopf 331 jedoch nicht.

Fig. 2 zeigt ein erstes Ausführungsbeispiel eines erfindungsgemässen Regals 5 als einfache Ausführung einer Regalstruktur. Das Regal 5 ist aus Komponenten eines Ausführungsbeispiels eines erfindungsgemässen Struktursystems 4 aufgebaut. Insbesondere ist das Regal 5 aus vier Vertikalstützen 41 gleicher Länge und vier Regalbodenrahmen 42 gleicher Grösse des Struktursystems 4 aufgebaut.

Die Vertikalstützen 41 sind jeweils im Wesentlichen rundrohrförmig mit einer zentralen Längsachse 413 ausgebildet. Sie umfassen jeweils eine gerade, sich entlang der Längsachse 413 erstreckende Reihe von Lochungen mit jeweils neun regelmässig beabstandeten einzelnen Lochungen 411. Die Lochungen 411 sind jeweils als Öffnung mit quadratischem Querschnitt in einer Wandung 414 der zugehörigen Vertikalstrebe 41 ausgebildet. Am unteren Ende sind die Vertikalstreben 41 jeweils mit einem Fuss 412 ausgestattet, auf welchen die Vertikalstreben 41 auf einem Boden aufstellbar sind.

Die Regalbodenrahmen 42 sind jeweils aus zwei längeren Längsstreben 422, zwei kürzeren Querstreben 421 und vier als Montageecken eingesetzte Konsolen 3 zusammengesetzt. Insbesondere sind jeweils eine Querstrebe 421 und eine Längsstrebe 422 über einen der Konsolen 3 rechtwinklig miteinander verbunden. Dadurch bildet der Regalbodenrahmen 4 eine im Wesentlichen rechteckige Form. Die Längsstreben 422 und die Querstreben 421 sind aus Vierkantrohren gebildet. Die Konsolen 3 der Regalbodenrahmen 42 sind oder werden wie weiter unten genauer beschrieben jeweils an einer der Vertikalstützen 41 befestigt, sodass Regalbodenrahmen 42 und Vertikalstützen 41 zusammen ein stabiles freistehendes Gestell als das Regal 5 bilden.

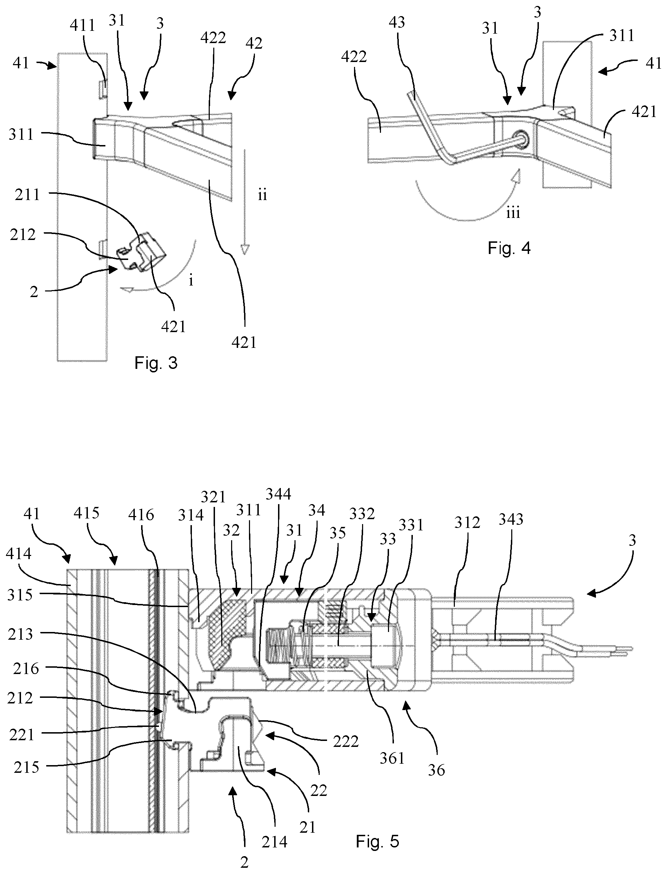

In Fig. 3 und Fig. 4 ist beispielhaft dargestellt, wie eine der Konsolen 3 der Regalbodenrahmen 42 über einen der Einhänger 2 einer der Vertikalstützen 41 montiert wird. In einem ersten Schritt (i) wird einer der Einhänger 2 in eine der Lochungen 411 eingesetzt. Dazu wird der Eingreifabschnitt 212 seines Grundkörpers 21 schräg in die eine der Lochungen 411 eingeführt, wieder vertikal ausgerichtet, sobald er sich innerhalb der Vertikalstütze 41 befindet, und auf den unteren Rand der einen der Lochungen 411 abgesetzt. Dabei umgreift der Hakenbereich 215 den unteren Rand der einen der Lochungen 411, sodass der Einhänger 2 formschlüssig und in horizontaler Richtung unbeweglich mit der Vertikalstütze 41 verbunden ist. Gleichzeitig greift der Zungenbereich 216 des Eingreifabschnitts 212 hinter den oberen Rand der einen der Lochungen 411. Dadurch ist der Eingreifabschnitt 212 abgestützt, sodass der ausserhalb der Vertikalstütze 41 liegende Tragabschnitt 211 des Grundkörpers 21 beladen werden kann.

In einem zweiten Schritt (ii) wird der Regalbodenrahmen 42 so auf den Einhänger 2 abgesetzt, dass die Kavität 313 der Konsole 3 den Tragabschnitt 211 des Grundkörpers 21 aufnimmt.

In einem dritten Schritt (iii) wird die Betätigungsschraube 33 wie in Fig. 4 ersichtlich mittels eines Sechskants 43 als Schraubendreher festgezogen. Dazu ist der durch die Durchgangsbohrung der Abdeckung 36 zugängliche Kopf 331 der Betätigungsschraube 33 mit einer Innensechskantfassung ausgestattet.

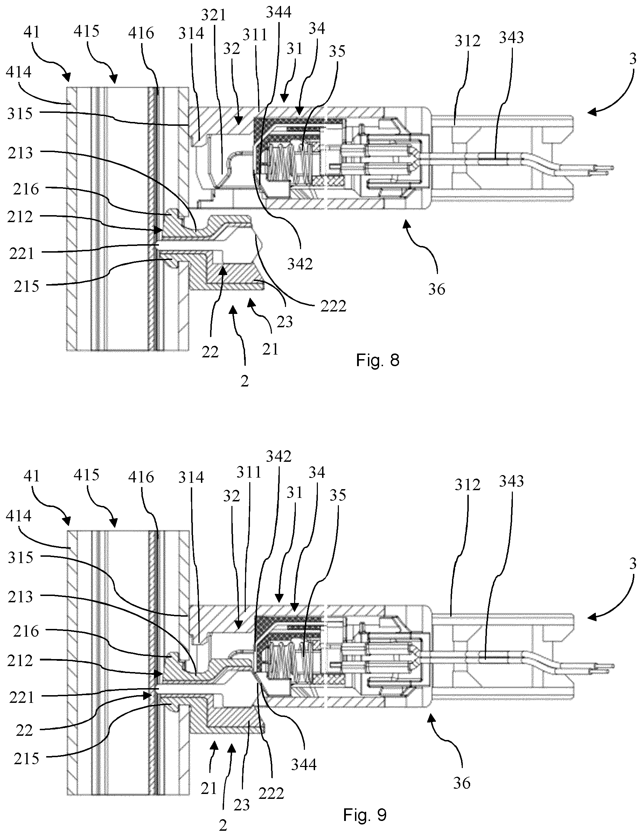

Die nachfolgenden Fig. 5 bis 7 zeigen das Montieren der Konsole 3 am in die eine der Lochungen 411 eingesetzten und so an der Vertikalstütze befestigten Einhänger 2 in einer entlang einer ersten Schnittebene geschnittenen Ansicht. Fig. 8 bis 10 zeigen das Gleiche in einer entlang einer parallel versetzt zur ersten Schnittebene liegenden zweiten Schnittebene geschnittenen Ansicht.

Insbesondere zeigt Fig. 5 die Konsole 3 noch bevor sie auf den Einhänger 2 aufgesetzt ist. Dabei ist im Schnitt entlang der ersten Schnittebene von Fig. 5 ersichtlich, dass das Krallenteil 32 den Stromabgreifer 34 seitlich umgibt. Insbesondere liegt die Vorderseite des Körpers 341 des Stromabgreifers 34 zwischen den beiden Flügelbereichen des Krallenteils 32. Die Flügelbereiche des Krallenteils 32 liegen an ihren Vorderseiten an einer Rückseite des in die Kavität 313 ragenden Vorsprungs 314 an. Zwischen dem Zwischenbereich des Krallenteils 32 und dem Stromabgreifer 34 ist die Spiralfeder 35 so eingespannt, dass der Stromabgreifer 34 nach vorne in Richtung Frontfläche 315 gedrückt wird. Dabei wird der Stromabgreifer 34 von einem parallel zum Vorsprung 314 liegenden zweiten Vorsprung gehalten beziehungsweise gegen diesen gedrückt.

Die Betätigungsschraube 3 ist so in die Bohrung des Zwischenbereichs des Krallenteils 32 eingedreht, das ihr Schaft 332 die Bohrung durchragt und zwischen den beiden Flügelbereichen des Krallenteils 32 liegt. Der Schaft 332 liegt dabei in der Spiralfeder 35.

Die Frontfläche 315 des Gehäuses 31 liegt bündig an einer Aussenseite der Wandung 414 der Vertikalstütze 41 an. Dabei umgreift sie die Vertikalstütze 41 teilweise. Die Vertikalstütze 41 umfasst ein in ihrem Innern angeordnetes Stromprofil 415. Das Stromprofil 415 weist einen Träger aus Aluminium auf sowie eine Isolationsbasis und zwei parallel zueinander verlaufende, gerade Leiterbahnen 416.

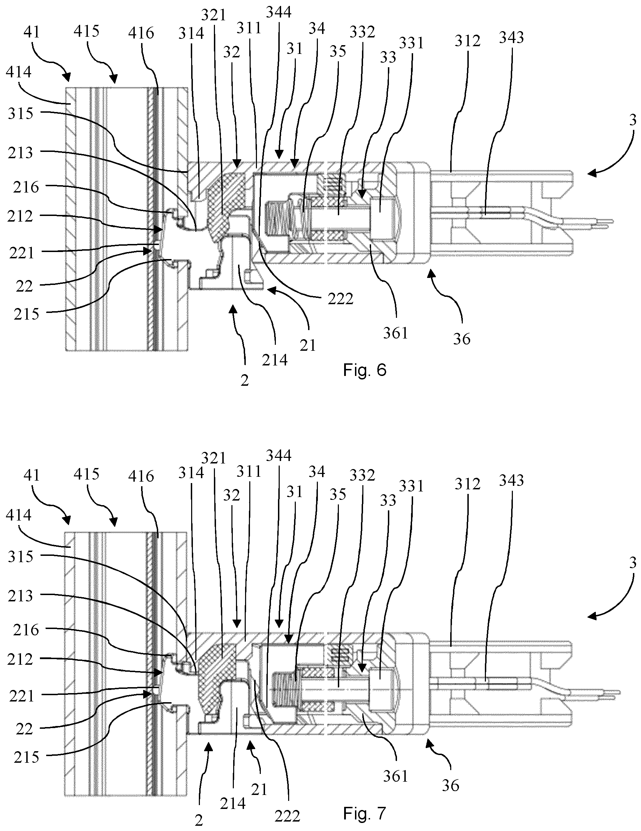

Die ersten Krallen 321 des Krallenteils 32 sind nach unten ausgerichtet und liegen oberhalb der nach oben ausgerichteten zweiten Krallen 214 des Grundkörpers 21 des Einhängers 2. Wie in Fig. 6 ersichtlich ist, wird zum Aufsetzen der Konsole 3 auf den Einhänger 2 die Konsole 3 entlang der Vertikalstütze 41 vertikal nach unten bewegt. Dabei kontaktieren sich die ersten Krallen 321 und die zweiten Krallen 214 beim Aufsetzen der Konsole 3 auf den Einhänger 2. Bei einem weiteren Nach-unten-Bewegen greifen die beiden Krallen 214, 321 ineinander, sodass sie am Ende benachbart zueinander liegen. Gleichzeitig wird der Vorsprung 314 des Gehäuses 31 der Konsole 3 in die Nut 213 des Einhängers 2 eingeschoben, sodass am Ende eine horizontale Bewegung der Konsole 3 weg von der Vertikalstütze 41 gesperrt ist.

In Fig. 7 ist gezeigt, dass durch ein Festziehen der Betätigungsschraube 33 nach dem Aufsetzen der Konsole 3 auf den Einhänger 2 das Krallenteil 32 horizontal nach rechts von der Vertikalstütze 41 weggezogen wird. Dabei wird die erste Kralle 321 gegen die zweite Kralle 214 gedrückt, wobei die zweite Kralle 214 eine horizontale Bewegung des Krallenteils 32 nach rechts blockiert. Da der Kopf 331 der Betätigungsschraube 33 im Schraubenkopfsitz 361 der Abdeckung 36 sitzt und an der Abdeckung 36 anliegt, wird so beim Festziehen der Betätigungsschraube 33 die Abdeckung 36 und über die Abdeckung 36 auch das Gehäuse 31 in Richtung der Vertikalstütze 41 gezogen. Die Frontfläche 315 wird dabei gegen die Vertikalstütze 41 gedrückt, sodass die Konsole 3 fest mit der Vertikalstütze 41 verspannt ist.

Fig. 8 zeigt die Konsole 3 wieder in der gleichen Position wie Fig. 5 noch bevor sie auf den an der Vertikalstütze 41 montierten Einhänger 2 aufgesetzt ist. Dabei ist im Schnitt entlang der zweiten Schnittebene von Fig. 8 ersichtlich, dass die Spiralfeder 35 den Stromabgreifer 34 nach vorne, das heisst horizontal in Richtung der Frontfläche 315 nach links drückt. Die Vorderseite des Körpers 341 des Stromabgreifers 34 ist mit den beiden Kontakten 342 bestückt, die sich von der Vorderseite durch den Körper 341 hindurch erstrecken und mit den Verbindungskabeln 343 verbunden sind.

Die Kontaktierstifte 22 des Einhängers 2 umfassen jeweils eine Basis, von der ein Stab horizontal in Richtung Stromschiene 415 des Vertikalrohrs 41 erstreckt. Das linke Ende des Stabs bildet dabei eine der Kontaktspitzen 221. Die Kontaktierstifte 22 sind in einem Innenraum des Grundkörpers 21 des Einhängers 2 so angeordnet, dass der Stab durch eine in einer Vorderseite des Grundkörpers 21 ausgebildete Vorderöffnung ragt und dass die Basis durch eine in einer Rückseite des Grundkörpers 21 ausgebildete Rücköffnung zugänglich ist. Insbesondere liegt die an der Basis ausgebildete schräge Rückseite 222 durch die Rücköffnung frei. Der Einhänger 2 umfasst weiter eine Isolationsschicht 23, die den Kontaktierstift 22 zum Grundkörper 21 hin elektrisch isoliert.

In Fig. 9 ist die Konsole 3 in der gleichen Position wie in Fig. 6 gezeigt, während sie auf den an der Vertikalstütze 41 montierten Einhänger 2 aufgesetzt wird. Dabei ist im Schnitt entlang der zweiten Schnittebene von Fig. 9 ersichtlich, dass die schräge Frontunterseite 342 des Stromabgreifers 34 an den schrägen Rückseiten 222 der Kontaktierstifte 22 anliegt. Dabei drückt ein weiteres Nach-unten-Bewegen der Konsole 3 den Stromabgreifer 34 und die Kontaktierstifte 22 horizontal auseinander. Dadurch werden zum einen die Kontaktierstifte 22 nach links in Richtung Stromschiene 415 bewegt, sodass die Kontaktspitzen 221 zunehmend an die Leiterbahnen 416 gedrückt werden. Zum anderen wird der Stromabgreifer 34 horizontal nach rechts bewegt, sodass die Spiralfeder 35 zunehmend komprimiert und gespannt wird.

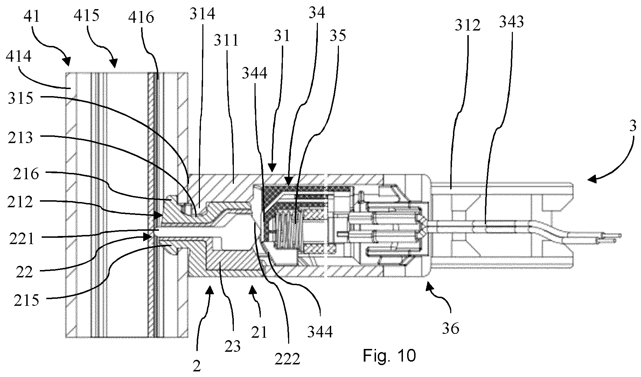

Fig. 10 zeigt die Konsole 3 in der gleichen Position wie in Fig. 7, in der sie auf den an der Vertikalstütze 41 montierten Einhänger 2 aufgesetzt ist. Dabei ist im Schnitt entlang der zweiten Schnittebene von Fig. 10 ersichtlich, dass die Kontakte 344 des Stromabgreifers 34 von der gespannten Spiralfeder 35 gegen die Kontaktierstifte 22 gedrückt werden. Dadurch werden die Kontaktspitzen 221 der Kontaktierstifte 22 gegen die Leiterbahnen 416 gedrückt. Auf diese Weise wird eine sichere und stabile durchgängige elektrische Verbindung beziehungsweise Kontaktierung von den Leiterbahnen 416 im Innern der Vertikalstütze 41 bis zu den Verbindungskabeln 343 der Konsole 34 erzeugt.

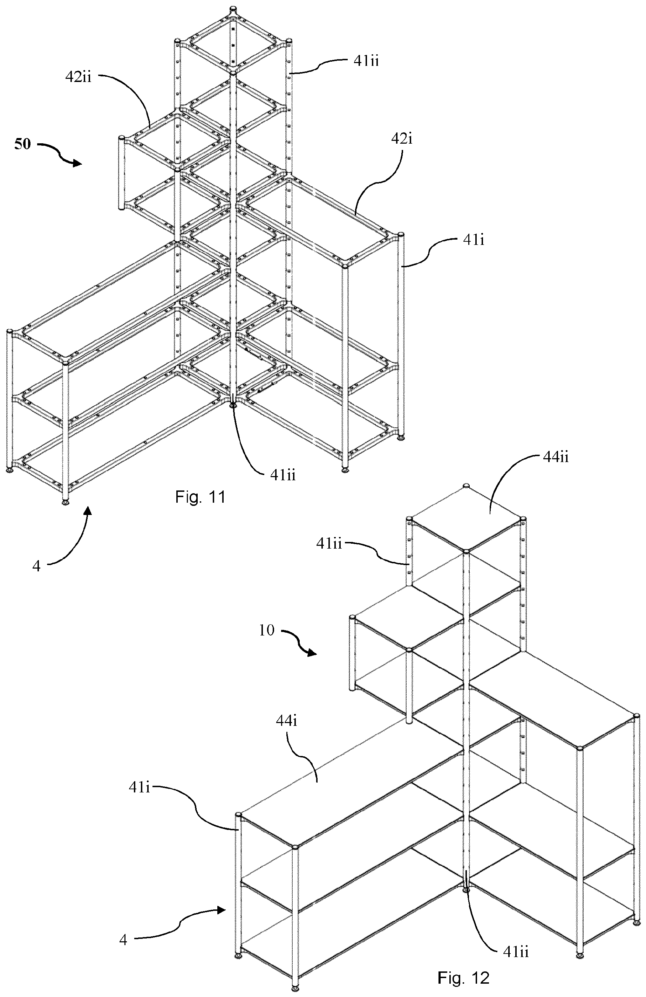

In Fig. 11 ist ein zweites Ausführungsbeispiel eines aus dem Struktursystem 4 aufgebauten erfindungsgemässen Regals 50 gezeigt. Insbesondere ist es aus sieben Vertikalstützen 41i mit einer Reihe von Lochungen, zwei Vertikalstützen 41ii mit zwei Reihen von Lochungen, einer Vertikalstütze 41iii mit drei Reihen von Lochungen, sechs grossen Regalbodenrahmen 42i, acht kleinen Regalbodenrahmen 42ii und achtundfünfzig Einhängern 2 aufgebaut. Die Vertikalstützen 41i beinhalten zwei Vertikalstützen 41i einer Länge von einer Regaleinheitshöhe, zwei Vertikalstützen 41i einer Länge von zwei Regaleinheitshöhen, zwei Vertikalstützen 41i einer Länge von drei Regaleinheitshöhen und eine Vertikalstütze 41i einer Länge von fünf Regaleinheitshöhen. Die Vertikalstützen 41ii und die Vertikalstützen 41iii weisen alle jeweils eine Länge von fünf Regaleinheitshöhen auf. Die Regaleinheitshöhe kann beispielsweise etwa der Höhe eines aufgestellten Ordners entsprechen.

Die Regalbodenrahmen 42i, 42ii sind jeweils über vier der Einhänger 2 an ihren als Montageecken eingesetzten Konsolen 3 mit vier Vertikalstützen 41i, 41ii, 41iii verbunden. Dabei sind die Einhänger 2 auf gewünschten Höhen in die passenden Lochungen eingehängt und die Regalbodenrahmen 42i, 42ii sind auf die jeweils zugehörigen vier Einhänger 2 wie oben detailliert beschrieben aufgesetzt. Zumindest einige der Einhänger 2 sind dazu ausgebildet, Strom im Innern der zugehörigen Vertikalstütze 41i, 41ii, 41iii abzugreifen und zum zugehörigen Regalbodenrahmen 42i, 42ii zu leiten.

Fig. 8 zeigt das Regal 50 im Endausbau. Insbesondere umfasst es zusätzlich sechs grosse Glasböden 44i und acht kleine Glasböden 44ii als Regalböden. Die Glasböden 44i, 44ii sind den Regalbodenrahmen 42i, 42ii entsprechend dimensioniert und auf diese aufgelegt beziehungsweise mit diesen verbunden.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen. Insbesondere deckt die vorliegende Erfindung weitere Ausführungsbeispiele mit irgendwelchen Kombinationen von Merkmalen ab, die von den explizit beschriebenen Merkmalskombinationen abweichen können.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die blosse Tatsache, dass bestimmte Masse in zueinander verschiedenen abhängigen Ansprüchen aufgeführt sind, bedeutet nicht, dass eine Kombination dieser Masse nicht vorteilhaft verwendet werden kann. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt.

**Bezugszeichenliste**

| | | | |
|---|---|---|---|
| 1 | Verbindungseinrichtung | 331 | Kopf |
| 2 | Einhänger | 332 | Schaft |
| 21 | Grundkörper | 34 | Stromabgreifer |
| 211 | Tragabschnitt | 341 | Körper |
| 212 | Eingreifabschnitt | 342 | Kontakt |
| 213 | Nut (zweite Koppelstruktur) | 343 | Verbindungskabel |
| 214 | zweite Kralle | 344 | schräge Frontunterseite (zweite Schrägfläche) |
| 215 | Hakenbereich | | |
| 216 | Zungenbereich | 35 | Spiralfeder (Federelement) |
| 22 | Kontaktierstift (Kontaktierelement) | 36 | Abdeckung |
| 221 | Kontaktspitze | 361 | Schraubenkopfsitz |
| 222 | schräge Rückseite (erste Schrägfläche) | 4 | Struktursystem |
| | | 41 | Vertikalstütze |
| 23 | Isolationsschicht | 411 | Lochung |
| 3 | Konsole | 412 | Fuss |
| 31 | Gehäuse (Gehäuseabschnitt | 413 | Längsachse |
| 311 | Fortsatz | 414 | Wandung |
| 312 | Steckabschnitt | 415 | Stromschiene |
| 313 | Kavität | 416 | Leiterbahn |
| 314 | Vorsprung (erste Koppelstruktur) | 42 | Regalbodenrahmen |
| 315 | Frontfläche | 421 | Querstrebe |
| 32 | Krallenteil | 422 | Längsstrebe |
| 321 | erste Kralle | 43 | Schraubendreher |
| 33 | Betätigungsschraube (Betätigungselement) | 44 | Regalboden |
| | | 5 | Regal |

## Patentansprüche

1. Verbindungseinrichtung (1) zur Montage eines Regalbodens beziehungsweise eines Regalbodenrahmens (42) an einer mit zumindest einer sich axial erstreckenden Reihe von Lochungen (411) ausgestatteten Vertikalstütze (41) zum Aufbau eines Regals (5; 50), umfassend
einen Einhänger (2) mit einem einen Eingreifabschnitt (212) und einen Tragabschnitt (211) aufweisenden Grundkörper (21), der zum Einhängen in eine der Lochungen (411) der Vertikalstütze (41) ausgebildet ist, so dass der Eingreifabschnitt (212) eine der Lochungen (411) der Vertikalstütze (41) hintergreift und der Tragabschnitt (211) ausserhalb der einen der Lochungen (411) der Vertikalstütze (41) angeordnet ist, und
eine Konsole (3) mit einem Gehäuseabschnitt (31), der eine zum Anliegen an die Vertikalstütze (41) ausgebildete Frontfläche (315) und eine zum Aufnehmen des Tragabschnitts (211) des Grundkörpers (21) des Einhängers (2) geformte Kavität (313) aufweist,
wobei die Konsole (3) mit einem Spannmechanismus ausgestattet ist, der dazu ausgebildet ist, den Gehäuseabschnitt (31) der Konsole (3) mit der Vertikalstütze (41) zu verspannen, wenn die Kavität (313) des Gehäuseabschnitts (31) der Konsole (3) den Tragabschnitt (211) des Grundkörpers (21) des Einhängers (2) aufnimmt und der Grundkörper (21) des Einhängers (2) in die eine der Lochungen (411) der Vertikalstütze (41) eingehängt ist,
**dadurch gekennzeichnet, dass**
der Spannmechanismus der Konsole (3) ein Krallenteil (32) mit einer ersten Kralle (321) umfasst,
der Tragabschnitt (211) des Grundkörpers (21) des Einhängers (2) mit einer zweiten Kralle (214) ausgestattet ist, und
die erste Kralle (321) des Krallenteils des Spannmechanismus der Konsole (3) und die zweite Kralle (214) des Tragabschnitts (211) des Grundkörpers (21) des Einhängers (2) ineinander greifen, wenn die Kavität (313) des Gehäuseabschnitts (31) der Konsole (3) den Tragabschnitt (211) des Grundkörpers (21) des Einhängers (2) aufnimmt und der Grundkörper (21) des Einhängers (2) in die eine der Lochungen (411) der Vertikalstütze (41) eingehängt ist.

2. Verbindungseinrichtung (1) nach Anspruch 1, wobei
die Kavität (313) des Gehäuseabschnitts (31) der Konsole (3) mit einer ersten Koppelstruktur (314) ausgestattet ist,
der Tragabschnitt (211) des Grundkörpers (21) des Einhängers (2) mit einer zweiten Koppelstruktur (213) ausgestattet ist, und
die erste Koppelstruktur (314) und die zweite Koppelstruktur (213) ineinander greifen, wenn die Kavität (313) des Gehäuseabschnitts (31) der Konsole (3) den Tragabschnitt (211) des Grundkörpers (21) des Einhängers (2) aufnimmt und der Grundkörper (21) des Einhängers (2) in die eine der Lochungen (411) der Vertikalstütze (41) eingehängt ist.

3. Verbindungseinrichtung (1) nach Anspruch 2, wobei die erste Koppelstruktur (314) der Kavität (313) des Gehäuseabschnitts (31) der Konsole (3) als ein Vorsprung (314) ausgebildet ist und die zweite Koppelstruktur (213) des Tragabschnitts (211) des Grundkörpers (21) des Einhängers (2) als eine Nut (213) ausgebildet ist.

4. Verbindungseinrichtung (1) nach einem der vorangehenden Ansprüche, wobei das Krallenteil (32) des Spannmechanismus der Konsole (3) im Gehäuseabschnitt (31) der Konsole (3) angeordnet ist und relativ zum Gehäuseabschnitt (31) der Konsole (3) bewegbar ist.

5. Verbindungseinrichtung (1) nach Anspruch 4, wobei der Spannmechanismus der Konsole (3) ein Betätigungselement (33) aufweist, das dazu ausgebildet ist, bei einer Betätigung das Krallenteil (32) so zu bewegen, dass die erste Kralle (321) des Krallenteils (32) des Spannmechanismus der Konsole (3) und die zweite Kralle (214) des Tragabschnitts (211) des Grundkörpers (21) des Einhängers (2) gegeneinander gedrückt werden, wobei das Betätigungselement (33) des Spannmechanismus der Konsole (3) vorzugsweise mit einem Gewinde und das Krallenteil (32) des Spannmechanismus der Konsole (3) mit einem dem Gewinde entsprechenden Gegengewinde ausgestattet sind, so dass ein Verdrehen des Gewindes zum Gegengewinde das Krallenteil (32) relativ zum Gehäuseabschnitt (31) der Konsole (3) bewegt.

6. Verbindungseinrichtung (1) nach Anspruch 5, wobei das Betätigungselement (33) des Spannmechanismus der Konsole (3) in einer Spannbewegungsrichtung ortsfest mit dem Gehäuseabschnitt (31) der Konsole (3) verbunden ist, und/oder wobei die Konsole (3) eine Abdeckung (36) umfasst, die das Krallenteil (32) im Gehäuseabschnitt (31) der Konsole (3) hält.

7. Verbindungseinrichtung nach Anspruch 6, wobei das Betätigungselement (33) des Spannmechanismus der Konsole (3) an der Abdeckung (36) der Konsole (3) montiert ist.

8. Verbindungseinrichtung (1) nach einem der vorangehenden Ansprüche, wobei
der Grundkörper (21) des Einhängers (2) eine Vorderseite und eine Rückseite aufweist,
die Vorderseite des Grundkörpers (21) des Einhängers (2) im Innern der Vertikalstütze (41) liegt, wenn der Grundkörper (21) des Einhängers (2) in die eine der Lochungen (411) der Vertikalstütze (41) eingehängt ist,
die Rückseite des Grundkörpers (21) des Einhängers (2) der Vertikalstütze (41) abgewandt liegt, wenn der Grundkörper (21) des Einhängers (2) in die eine der Lochungen (411) der Vertikalstütze (41) eingehängt ist, und
der Einhänger (2) dazu ausgebildet ist, Strom von der Vorderseite des Grundkörpers (21) zur Rückseite des Grundkörpers (21) zu leiten,
wobei vorzugsweise
der Einhänger (2) ein Kontaktierelement (22) umfasst, das aus einem elektrisch leitenden Material hergestellt ist,
der Grundkörper (21) einen Innenraum aufweist, der über eine Vorderöffnung zur Vorderseite hin und über eine Rücköffnung zur Rückseite hin geöffnet ist, und
das Kontaktierelement (22) im Innenraum des Grundkörpers (21) angeordnet ist, sodass das Kontaktierelement (22) durch die Vorderöffnung ragt und durch die Rücköffnung zugänglich ist, wobei vorzugsweise das Kontaktiertierelement (22) des Einhängers (2) so im Innenraum des Grundkörpers (21) des Einhängers (2) angeordnet ist, dass es in einer Kontaktierbewegungsrichtung relativ zum Grundkörper (21) des Einhängers (2) bewegbar ist.

9. Verbindungseinrichtung (1) nach einem der vorangehenden Ansprüche, wobei die Konsole (3) einen Stromabgreifer (34) aufweist, der im Gehäuseabschnitt (31) der Konsole (3) angeordnet ist und relativ zum Gehäuseabschnitt (31) der Konsole (3) bewegbar ist, wobei die Konsole (3) vorzugsweise ein Federelement (35) aufweist, das den Stromabgreifer (34) der Konsole (3) gegen den Einhänger (2) drückt, wenn die Kavität (313) des Gehäuseabschnitts (31) der Konsole (3) den Tragabschnitt (211) des Grundkörpers (21) des Einhängers (2) aufnimmt.

10. Verbindungseinrichtung (1) nach Anspruch 9, wobei das Federelement (35) der Konsole (3) den Stromabgreifer (34) der Konsole (3) durch die Rücköffnung des Grundkörpers (21) gegen das Kontaktierelement (22) des Einhängers (2) drückt.

11. Verbindungseinrichtung (1) nach Anspruch 9 oder 10 wobei das Kontaktierelement (22) des Einhängers (2) eine erste Schrägfläche (222) und der Stromabgreifer der Konsole (3) eine gegenläufig zur ersten Schrägfläche (222) ausgebildete zweite Schrägfläche (344) aufweist, die so angeordnet sind, dass sie aneinander anliegen, wenn die Kavität (313) des Gehäuseabschnitts (31) der Konsole (3) den Tragabschnitt (211) des Grundkörpers (21) des Einhängers (2) aufnimmt.

12. Verbindungseinrichtung (1) nach einem der vorangehenden Ansprüche, wobei der Gehäuseabschnitt (31) der Konsole (3) mit zwei Steckabschnitten (312) zum Aufstecken jeweils einer Strebe (421, 422) ausgestattet ist, wobei die Steckabschnitte (312) in einem quasi rechten Winkel zueinander verlaufen, wobei der Gehäuseabschnitt (31) der Konsole (3) vorzugsweise einen die Kavität (313) und die Frontfläche (315) aufweisenden Fortsatz (311) umfasst, der sich etwa entlang einer Winkelhalbierenden eines Aussenwinkels der beiden Steckabschnitte (312) erstreckt.

13. Verbindungseinrichtung (1) nach einem der vorangehenden Ansprüche, wobei der Eingreifabschnitt (212) des Einhängers (2) einen Hakenbereich (215) aufweist, der dazu ausgebildet ist, in die eine der Lochungen (411) der Vertikalstütze (41) eingehängt zu werden, wobei der Eingreifabschnitt (212) des Einhängers (2) vorzugsweise einen sich entgegen dem Hakenbereich (215) erstreckenden Zungenbereich (216) aufweist, der dazu ausgebildet ist, an einer Wandung (414) der Vertikalstütze (41) anzuliegen, wenn der Grundkörper (21) des Einhängers (2) in die eine der Lochungen (411) der Vertikalstütze (41) eingehängt ist.

14. Struktursystem (4) zum modularen Aufbau von Regalen mit zumindest einer Vertikalstütze (41), die mit zumindest einer sich axial erstreckenden Reihe von Lochungen (411) ausgestattet ist, und zumindest einer Verbindungseinrichtung (1) nach einem der vorangehenden Ansprüche,
wobei vorzugsweise
die zumindest eine Vertikalstütze (41) einen hohlen Rohrkörper und ein mit zumindest einer Leiterbahn (416) ausgestattetes Stromprofil (415) aufweist,
der Rohrkörper mit der zumindest einen Reihe von Lochungen (411) ausgestattet ist, und
das Stromprofil (415) innerhalb des Rohrkörpers angeordnet ist, so dass sich die zumindest eine Leiterbahn (416) entlang des Rohrkörpers erstreckt; und/oder
wobei das Struktursystem zumindest drei weitere Vertikalstützen (41) mit jeweils zumindest einer sich axial erstreckenden Reihe von Lochungen (411), zumindest sieben weitere Verbindungseinrichtung (1) nach einem der Ansprüche 1 bis 13 und zumindest acht Streben (421, 422) umfasst, wobei jeweils vier Streben (421, 422) mit vier Konsolen (3) der zumindest einen Verbindungseinrichtung (1) einen Regalbodenrahmen (42) bilden, indem jeweils zwei Streben (421, 422) über eine der Konsolen (3) miteinander verbunden sind.

15. Regal (5; 50), das aus einem Struktursystem (4) gemäss Anspruch 14 aufgebaut ist.

## Claims

1. A connection device (1) for installing a shelf or a shelf frame (42) on a vertical support (41) equipped with at least one axially extending row of perforations (411) in order to construct a shelving unit (5; 50), comprising:
a hanger component (2) with a main body (21) having an engagement portion (212) and a support portion (211) and being designed to be suspended from one of the perforations (411) of the vertical support (41) such that the engagement portion (212) engages behind one of the perforations (411) of the vertical support (41) and the support portion (211) is arranged outside of the aforementioned perforation of the perforations (411) of the vertical support (41), and
a bracket (3) comprising a housing portion (31) which has a front face (315) designed to rest against the vertical support (41) and a cavity (313) that is shaped so as to receive the support portion (211) of the main body (21) of the hanger component (2),
wherein the bracket (3) is equipped with a clamping mechanism which is designed to clamp the housing portion (31) of the bracket (3) together with the vertical support (41) when the cavity (313) of the housing portion (31) of the bracket (3) receives the support portion (211) of the main body (21) of the hanger component (2) and the main body (21) of the hanger component (2) is suspended from the aforementioned perforation of the perforations (411) of the vertical support (41),
**characterized in that**
the clamping mechanism of the bracket (3) comprises a claw part (32) having a first claw (321),
the support portion (211) of the main body (21) of the hanger component (2) is equipped with a second claw (214), and
the first claw (321) of the claw part of the clamping mechanism of the bracket (3) and the second claw (214) of the support portion (211) of the main body (21) of the hanger component (2) engage in one another when the cavity (313) of the housing portion (31) of the bracket (3) receives the support portion (211) of the main body (21) of the hanger component (2) and the main body (21) of the hanger component (2) is suspended from the aforementioned perforation of the perforations (411) of the vertical support (41).

2. The connection device (1) according to claim 1, wherein
the cavity (313) of the housing portion (31) of the bracket (3) is equipped with a first coupling structure (314),
the support portion (211) of the main body (21) of the hanger component (2) is equipped with a second coupling structure (213), and
the first coupling structure (314) and the second coupling structure (213) engage in one another when the cavity (313) of the housing portion (31) of the bracket (3) receives the support portion (211) of the main body (21) of the hanger component (2) and the main body (21) of the hanger component (2) is suspended from the aforementioned perforation of the perforations (411) of the vertical support (41).

3. The connection device (1) according to claim 2, wherein the first coupling structure (314) of the cavity (313) of the housing portion (31) of the bracket (3) is designed as a projection (314) and the second coupling structure (213) of the support portion (211) of the main body (21) of the hanger component (2) is designed as a groove (213).

4. The connection device (1) according to any one of the preceding claims, wherein the claw part (32) of the clamping mechanism of the bracket (3) is arranged in the housing portion (31) of the bracket (3) and is movable relative to the housing portion (31) of the bracket (3).

5. The connection device (1) according to claim 4, wherein the clamping mechanism of the bracket (3) has an actuating element (33) which is designed to move the claw part (32) when it is actuated in such a way that the first claw (321) of the claw part (32) of the clamping mechanism of the bracket (3) and the second claw (214) of the support portion (211) of the main body (21) of the hanger component (2) are pushed against one another, wherein the actuating element (33) of the clamping mechanism of the bracket (3) preferably is equipped with a thread and the claw part (32) of the clamping mechanism of the bracket (3) is equipped with a mating thread corresponding to the thread, such that twisting the thread relative to the mating thread moves the claw part (32) relative to the housing portion (31) of the bracket (3).

6. The connection device (1) according to claim 5, wherein the actuating element (33) of the clamping mechanism of the bracket (3) is connected in a stationary manner to the housing portion (31) of the bracket (3) in a clamping movement direction, and/or wherein the bracket (3) comprises a cover (36) which holds the claw part (32) in the housing portion (31) of the bracket (3).

7. The connection device according to claim 6, wherein the actuating element (33) of the clamping mechanism of the bracket (3) is mounted on the cover (36) of the bracket (3).

8. The connection device (1) according to any of the preceding claims, wherein
the main body (21) of the hanger component (2) has a front side and a rear side,
the front side of the main body (21) of the hanger component (2) is inside the vertical support (41) when the main body (21) of the hanger component (2) is suspended from the aforementioned perforation of the perforations (411) of the vertical support (41),
the rear side of the main body (21) of the hanger component (2) faces away from the vertical support (41) when the main body (21) of the hanger component (2) is suspended from the aforementioned perforation of the perforations (411) of the vertical support (41), and
the hanger component (2) is designed to conduct current from the front side of the main body (21) to the rear side of the main body (21),
wherein preferably
the hanger component (2) comprises a contact element (22) made of an electrically conductive material,
the main body (21) has an interior which is open to the front side via a front opening and to the rear side via a rear opening, and
the contact element (22) is arranged in the interior of the main body (21), so that the contact element (22) protrudes through the front opening and is accessible through the rear opening,
wherein preferably
the contact element (22) of the hanger component (2) is arranged in the interior of the main body (21) of the hanger component (2) in such a way that it can be moved in a contacting movement direction relative to the main body (21) of the hanger component (2).

9. The connection device (1) according to any of the preceding claims, wherein the bracket (3) has a current tap (34) which is arranged in the housing portion (31) of the bracket (3) and is movable relative to the housing portion (31) of the bracket (3), wherein the bracket (3) preferably has a spring element (35) which pushes the current tap (34) of the bracket (3) against the hanger component (2) when the cavity (313) of the housing portion (31) of the bracket (3) receives the support portion (211) of the main body (21) of the hanger component (2) .

10. The connection device (1) according to claim 9, wherein the spring element (35) of the bracket (3) pushes the current tap (34) of the bracket (3) through the rear opening of the main body (21) against the contact element (22) of the hanger component (2).

11. The connection device (1) according to any of claims 9 or 10, wherein the contact element (22) of the hanger component (2) has a first inclined face (222) and the current tap of the bracket (3) has a second inclined face (344) formed counter to the first inclined face (222), the two being arranged such that they rest against one another when the cavity (313) of the housing portion (31) of the bracket (3) receives the support portion (211) of the main body (21) of the hanger component (2).

12. The connection device (1) according to any of the preceding claims, wherein the housing portion (31) of the bracket (3) is equipped with two mating portions (312) for attaching a strut (421, 422) in each case, wherein the mating portions (312) run at quasi-right angles to one another, wherein the housing portion (31) of the bracket (3) preferably comprises a projection (311) which has the cavity (313) and the front face (315) and which extends approximately along a bisector of an external angle of the two mating portions (312).

13. The connection device (1) according to any of the preceding claims, wherein the engagement portion (212) of the hanger component (2) has a hook region (215) which is designed to be suspended from the aforementioned perforation of the perforations (411) of the vertical support (41), wherein the engagement portion (212) of the hanger component (2) preferably has a tongue region (216) which extends counter to the hook region (215) and which is designed to rest against a wall (414) of the vertical support (41) when the main body (21) of the hanger component (2) is suspended from the aforementioned perforation of the perforations (411) of the vertical support (41).

14. A structural system (4) for the modular construction of shelving units having at least one vertical support (41) equipped with at least one axially extending row of perforations (411), and at least one connection device (1) according to any of the preceding claims, wherein preferably
the at least one vertical support (41) has a hollow tubular body and a current profile (415) equipped with at least one conductor track (416),
the tubular body is equipped with the at least one row of perforations (411), and
the current profile (415) is arranged within the tubular body, such that the at least one conductor track (416) extends along the tubular body;
and/or
wherein the structural system includes at least three further vertical supports (41), each having at least one axially extending row of perforations (411), at least seven further connection devices (1) according to any of claims 1 to 13 and at least eight struts (421, 422), wherein in each case four struts (421, 422) with four brackets (3) of the at least one connection device (1) form a shelf frame (42) by two struts (421, 422) being connected to one another via one of the brackets (3).

15. A shelving unit (5; 50) constructed from a structural system (4) according to claim 14.

## Revendications

1. Dispositif de liaison (1) pour le montage d'un rayonnage ou d'un cadre de rayonnage (42) sur un support vertical (41) pourvu d'au moins une rangée de perforations (411) s'étendant axialement pour la construction d'une étagère (5 ; 50), comprenant
un dispositif d'accrochage (2) comportant un corps de base (21) présentant une section de mise en prise (212) et une section de soutien (211), lequel corps de base est réalisé pour être accroché dans l'une des perforations (411) du support vertical (41) de sorte que la section de mise en prise (212) vient en prise derrière l'une des perforations (411) du support vertical (41) et que la section de soutien (211) est disposée à l'extérieur de l'une des perforations (411) du support vertical (41), et
une console (3) comportant une section formant boîtier (31) présentant une surface avant (315) réalisée pour s'appuyer contre le support vertical (41) et une cavité (313) formée pour recevoir la section de soutien (211) du corps de base (21) du dispositif d'accrochage (2),
dans lequel la console (3) est pourvue d'un mécanisme de serrage réalisé pour serrer la section formant boîtier (31) de la console (3) avec le support vertical (41) lorsque la cavité (313) de la section formant boîtier (31) de la console (3) reçoit la section de soutien (211) du corps de base (21) du dispositif d'accrochage (2) et que le corps de base (21) du dispositif d'accrochage (2) est accroché dans l'une des perforations (411) du support vertical (41),
**caractérisé en ce que**
le mécanisme de serrage de la console (3) comprend une partie à griffe (32) comportant une première griffe (321),
la section de soutien (211) du corps de base (21) du dispositif d'accrochage (2) est pourvue d'une seconde griffe (214), et
la première griffe (321) de la partie à griffe du mécanisme de serrage de la console (3) et la seconde griffe (214) de la section de soutien (211) du corps de base (21) du dispositif d'accrochage (2) viennent en prise l'une dans l'autre lorsque la cavité (313) de la section formant boîtier (31) de la console (3) reçoit la section de soutien (211) du corps de base (21) du dispositif d'accrochage (2) et que le corps de base (21) du dispositif d'accrochage (2) est accroché dans l'une des perforations (411) du support vertical (41).

2. Dispositif de liaison (1) selon la revendication 1, dans lequel
la cavité (313) de la section formant boîtier (31) de la console (3) est pourvue d'une première structure d'accouplement (314),
la section de soutien (211) du corps de base (21) du dispositif d'accrochage (2) est pourvue d'une seconde structure d'accouplement (213), et
la première structure d'accouplement (314) et la seconde structure d'accouplement (213) viennent en prise l'une dans l'autre lorsque la cavité (313) de la section formant boîtier (31) de la console (3) reçoit la section de soutien (211) du corps de base (21) du dispositif d'accrochage (2) et que le corps de base (21) du dispositif d'accrochage (2) est accroché dans l'une des perforations (411) du support vertical (41).

3. Dispositif de liaison (1) selon la revendication 2, dans lequel la première structure d'accouplement (314) de la cavité (313) de la section formant boîtier (31) de la console (3) est réalisée sous forme de saillie (314) et la seconde structure d'accouplement (213) de la section de soutien (211) du corps de base (21) du dispositif d'accrochage (2) est réalisée sous forme de rainure (213).

4. Dispositif de liaison (1) selon l'une des revendications précédentes, dans lequel la partie à griffe (32) du mécanisme de serrage de la console (3) est disposée dans la section formant boîtier (31) de la console (3) et peut être déplacée par rapport à la section formant boîtier (31) de la console (3).

5. Dispositif de liaison (1) selon la revendication 4, dans lequel le mécanisme de serrage de la console (3) présente un élément d'actionnement (33) réalisé pour déplacer la partie à griffe (32) lors d'un actionnement de sorte que la première griffe (321) de la partie à griffe (32) du mécanisme de serrage de la console (3) et la seconde griffe (214) de la section de soutien (211) du corps de base (21) du dispositif d'accrochage (2) sont pressées l'une contre l'autre, dans lequel l'élément d'actionnement (33) du mécanisme de serrage de la console (3) est de préférence pourvu d'un filetage et la partie à griffe (32) du mécanisme de serrage de la console (3) est pourvue d'un contre-filetage correspondant au filetage de sorte qu'une rotation du filetage par rapport au contre-filetage déplace la partie à griffe (32) par rapport à la section formant boîtier (31) de la console (3).

6. Dispositif de liaison (1) selon la revendication 5, dans lequel l'élément d'actionnement (33) du mécanisme de serrage de la console (3) est relié de manière fixe à la section formant boîtier (31) de la console (3) dans une direction de déplacement de serrage, et/ou dans lequel la console (3) comprend un élément de recouvrement (36) qui maintient la partie à griffe (32) dans la section formant boîtier (31) de la console (3).

7. Dispositif de liaison selon la revendication 6, dans lequel l'élément d'actionnement (33) du mécanisme de serrage de la console (3) est monté sur l'élément de recouvrement (36) de la console (3).

8. Dispositif de liaison (1) selon l'une des revendications précédentes, dans lequel
le corps de base (21) du dispositif d'accrochage (2) présente un côté avant et un côté arrière,
le côté avant du corps de base (21) du dispositif d'accrochage (2) se trouve à l'intérieur du support vertical (41) lorsque le corps de base (21) du dispositif d'accrochage (2) est accroché dans l'une des perforations (411) du support vertical (41),
le côté arrière du corps de base (21) du dispositif d'accrochage (2) est opposé au support vertical (41) lorsque le corps de base (21) du dispositif d'accrochage (2) est accroché dans l'une des perforations (411) du support vertical (41), et
le dispositif d'accrochage (2) est réalisé pour guider du courant du côté avant du corps de base (21) au côté arrière du corps de base (21), dans lequel de préférence le dispositif d'accrochage (2) comprend un élément de contact (22) fabriqué en un matériau électriquement conducteur,
le corps de base (21) présente un espace intérieur qui est ouvert vers le côté avant par l'intermédiaire d'une ouverture avant et vers le côté arrière par l'intermédiaire d'une ouverture arrière, et
l'élément de contact (22) est disposé dans l'espace intérieur du corps de base (21) de sorte que l'élément de contact (22) fait saillie à travers l'ouverture avant et est accessible à travers l'ouverture arrière, dans lequel de préférence l'élément de contact (22) du dispositif d'accrochage (2) est disposé dans l'espace intérieur du corps de base (21) du dispositif d'accrochage (2) de sorte qu'il peut être déplacé dans une direction de déplacement de contact par rapport au corps de base (21) du dispositif d'accrochage (2).

9. Dispositif de liaison (1) selon l'une des revendications précédentes, dans lequel la console (3) présente un adaptateur à fusibles (34) disposé dans la section formant boîtier (31) de la console (3) et pouvant être déplacé par rapport à la section formant boîtier (31) de la console (3), dans lequel la console (3) présente de préférence un élément formant ressort (35) qui presse l'adaptateur à fusibles (34) de la console (3) à l'encontre du dispositif d'accrochage (2) lorsque la cavité (313) de la section formant boîtier (31) de la console (3) reçoit la section de soutien (211) du corps de base (21) du dispositif d'accrochage (2).

10. Dispositif de liaison (1) selon la revendication 9, dans lequel l'élément formant ressort (35) de la console (3) presse l'adaptateur à fusibles (34) de la console (3) à travers l'ouverture arrière du corps de base (21) et à l'encontre de l'élément de contact (22) du dispositif d'accrochage (2).

11. Dispositif de liaison (1) selon la revendication 9 ou 10, dans lequel l'élément de contact (22) du dispositif d'accrochage (2) présente une première surface biseautée (222) et l'adaptateur à fusibles de la console (3) présente une seconde surface biseautée (344) réalisée en sens inverse de la première surface biseautée (222), lesquelles sont disposées de sorte à s'appuyer l'une contre l'autre lorsque la cavité (313) de la section formant boîtier (31) de la console (3) reçoit la section de soutien (211) du corps de base (21) du dispositif d'accrochage (2).

12. Dispositif de liaison (1) selon l'une des revendications précédentes, dans lequel la section formant boîtier (31) de la console (3) est pourvue de deux sections d'emboîtement (312) pour l'emboîtement respectif d'une entretoise (421, 422), dans lequel les sections d'emboîtement (312) s'étendent à angle quasi droit l'une par rapport à l'autre, dans lequel la section formant boîtier (31) de la console (3) comprend de préférence un prolongement (311) présentant la cavité (313) et la surface frontale (315), lequel s'étend approximativement le long d'une bissectrice d'angle d'un angle extérieur des deux sections d'emboîtement (312).

13. Dispositif de liaison (1) selon l'une des revendications précédentes, dans lequel la section de mise en prise (212) du dispositif d'accrochage (2) présente une zone formant crochet (215) réalisée pour être accrochée dans l'une des perforations (411) du support vertical (41), dans lequel la section de mise en prise (212) du dispositif d'accrochage (2) présente de préférence une zone formant languette (216) s'étendant à l'opposé de la zone formant crochet (215) et réalisée pour s'appuyer contre une paroi (414) du support vertical (41) lorsque le corps de base (21) du dispositif d'accrochage (2) est accroché dans l'une des perforations (411) du support vertical (41).

14. Système structurel (4) pour la construction modulaire d'étagères, comportant au moins un support vertical (41) pourvu d'au moins une rangée de perforations (411) s'étendant axialement, et au moins un dispositif de liaison (1) selon l'une des revendications précédentes,
dans lequel, de préférence
l'au moins un support vertical (41) présente un corps tubulaire creux et un profilé de courant (415) pourvu d'au moins une piste conductrice (416),
le corps tubulaire est pourvu de l'au moins une rangée de perforations (411), et
le profilé de courant (415) est disposé à l'intérieur du corps tubulaire de sorte que l'au moins une piste conductrice (416) s'étend le long du corps tubulaire ; et/ou
dans lequel le système structurel comprend au moins trois autres supports verticaux (41) comportant respectivement au moins une rangée de perforations (411) s'étendant axialement, au moins sept autres dispositifs de liaison (1) selon l'une des revendications 1 à 13 et au moins huit entretoises (421, 422), dans lequel respectivement quatre entretoises (421, 422) forment un cadre de rayonnage (42) avec quatre consoles (3) de l'au moins un dispositif de liaison (1), dans lequel respectivement deux entretoises (421, 422) sont reliées l'une à l'autre par l'intermédiaire d'une des consoles (3).

15. Étagère (5 ; 50) construite à partir d'un système structurel (4) selon la revendication 14.
